# EUROPÄISCHE PATENTANMELDUNG

(11) **EP 1 209 059 A2**
(43) Veröffentlichungstag der Anmeldung: **29.05.2002**
(21) Anmeldenummer: 01250358.7
(22) Anmeldetag: 15.10.2001
(51) Int. Cl.: B62D 1/19, B62D 1/10

(54) **Lenkeinrichtung für ein Kraftfahrzeug**

(30) Priorität: 23.11.2000 DE 10059928
(71) Anmelder: Takata-Petri AG, 63743 Aschaffenburg (DE)
(72) Erfinder: Adomeit, Heinz-Dieter, Dr., 10623 Berlin (DE)
(74) Vertreter: Baumgärtel, Gunnar, Dr.

(57) **Zusammenfassung**

Die Erfindung betrifft eine Lenkeinrichtung für ein Kraftfahrzeug mit einer Lenkbetätigung, die drehbar auf einer Achse gelagert und zur Bedienung durch einen Fahrzeuginsassen ausgebildet ist, insbesondere in Form eines Lenkrades; mit einer Getriebeanordnung, mittels der eine Drehbewegung der Lenkbetätigung in eine Bewegung eines außerhalb der Drehachse angeordneten längserstreckten Lenkelementes, umsetzbar ist; und mit einer längserstreckten Halterung, die die Drehachse der Lenkbetätigung definiert und die an einer ortsfesten Struktur des Kraftfahrzeugs festgelegt ist. Erfindungsgemäß ist vorgesehen, daß die Halterung (4) mindestens ein Element (43, 47, 49) aufweist, das bei einem Aufprall eines Fahrzeuginsassen auf die Lenkbetätigung (1) eine Verkürzung und/oder ein Verkippen der Halterung (4) bewirkt.

## Beschreibung

Die Erfindung betrifft eine Lenkeinrichtung für ein Kraftfahrzeug nach dem Oberbegriff des Patentanspruchs 1.

Eine derartige Lenkeinrichtung umfasst eine Lenkbetätigung, die drehbar auf einer Achse gelagert und zur Bedienung durch einen Fahrzeuginsassen ausgebildet ist, insbesondere in Form eines Lenkrades; einer Getriebeanordnung, mittels der eine Drehbewegung der Lenkbetätigung in eine Bewegung eines außerhalb der Drehachse angeordneten, längserstreckten Lenkelementes (z.B. einer Lenkspindel) umsetzbar ist; sowie eine längserstreckte Halterung, die die Drehachse der Lenkbetätigung definiert und die an einer ortsfesten Struktur des Kraftfahrzeugs festgelegt ist.

Unter dem längserstreckten Lenkelement wird dabei ein solches Lenkelement verstanden, das sich von der Lenkbetätigung zu den Spurstangen des entsprechenden Fahrzeugs erstreckt und dort mit dem sogenannten Lenkgetriebe gekoppelt ist. Als längserstreckte Lenkelemente werden insbesondere Lenkwellen bzw. Lenkspindeln verwendet. Vorliegend ist jedoch die konkrete Ausbildung des längserstreckten Lenkelementes (etwa im Hinblick auf das sogenannte "drive by wire") nicht von Bedeutung.

Unter einer ortsfesten Struktur des Kraftfahrzeugs wird ein Bauteil bzw. eine Baugruppe des Fahrzeugs verstanden, das bzw. die durch eine Betätigung der Lenkeinrichtung in ihrer räumlichen Lage nicht beeinflusst wird. Sie bewegt sich also nicht gemeinsam mit einem bewegbaren Element der Lenkeinrichtung, wie z. B. der Lenkbetätigung (Lenkrad) oder des längserstreckten Lenkelementes (Lenkspindel).

Lenkeinrichtungen der eingangs genannten Art sind beispielsweise aus der DE 21 31 902 A1, der DE 21 36 593 A1 und der DE 89 05 457 U1 bekannt.

Bei derartigen Lenkeinrichtungen definiert die Halterung, die in der Regel als Haltesäule ausgebildet ist, eine Drehachse für das Lenkrad, indem dieses mit seiner Lenkradnabe auf der Haltesäule drehbar gelagert ist. Die Haltesäule selbst ist ortsfest und kann somit zur ortsfesten Lagerung weitere Funktionsgruppen eines Kraftfahrzeugs, wie z. B. einer Sicherheitsvorrichtung (Airbagmodul) oder elektrischer geräte bzw. Bedienelemente dienen.

Aus der DE 30 07 726 C2 und der FR 2 633 239 A3 sind außerdem Lenkeinrichtungen mit einer ortsfesten zentralen Baugruppe bekannt, bei denen das Lenkrad jeweils zur Einstellung einer für den jeweiligen Fahrer komfortablen Position axial verschiebbar und in seiner Neigung verstellbar ist.

Der Erfindung liegt die Aufgabe zugrunde, eine Lenkeinrichtung der eingangs genannten Art weiter zu verbessern.

Diese Aufgabe wird erfindungsgemäß durch die Schaffung einer Lenkeinrichtung mit den Merkmalen des Patentanspruchs 1 gelöst.

Danach weist die Halterung mindestens ein Element auf, das bei einem Aufprall eines Fahrzeuginsassen auf die Lenkbetätigung eine Verkürzung und/oder ein Verkippen der Halterung bewirkt. Hierunter wird dabei ein beliebiges Element verstanden, das bei einem Aufprall eines Fahrzeuginsassen auf die Lenkbetätigung eine definierte Verkürzung der längserstreckten Halterung entlang ihrer Erstreckungsachse bzw. ein definiertes Verkippen der Halterung entlang einer vorgegebenen Richtung erleichtert.

Durch das Verkürzen der Halterung entfernt sich diese von dem aufprallenden Fahrzeuginsassen. Durch ein gezieltes Verkippen der Halterung können die Lenkbetätigung (Lenkrad) sowie eine regelmäßig im Bereich der Lenkbetätigung angeordnete Sicherheitseinrichtung (Airbagmodul) gezielt in eine definierte Lage bezüglich des Körpers des aufprallenden Insassen gebracht werden. Hierdurch kann das Zusammenwirken des Körpers des Insassen mit der Lenkbetätigung sowie gegebenenfalls der Sicherheitseinrichtung biomechanisch optimiert werden. Insbesondere kann eine parallele Bewegung des Körpers des Insassen einerseits sowie eines sich entfaltenden Gassackes eines Airbagmodules andererseits erreicht werden.

Die Längsachse des Lenkelementes bzw. ein hierauf gelagertes Getriebeelement kann dabei (wegen der außermittigen Anordnung der Lenkbetätigung bezüglich der Längsachse des Lenkelementes) einen Schwenkpunkt definieren, um den die Halterung und damit die Lenkbetätigung verkippt, wie unten bei Erläuterung von bevorzugten Ausführungsformen der Erfindung noch näher dargestellt werden wird.

Die Verkürzung der Halterung muß nicht zwingend eine Änderung der absoluten Länge der Halterung (z.B. durch Stauchen oder Teleskopieren) zur Folge haben. Es ist auch denkbar, daß die Halterung von dem Fahrzeuginsassen weg verschoben wird; dies führt bei einer konstanten tatsächlichen Länge der Halterung zu einer Verkürzung von deren effektiver Länge, nämlich der Länge gemessen von dem Punkt aus, an dem die Halterung ursprünglich (vor dem Verschieben) mit der fahrzeugfesten Struktur verbunden war.

Das Verkippen der Halterung erfolgt vorzugsweise in der Weise, dass diese - bezogen auf den in einem Kraftfahrzeug eingebauten Zustand der Lenkeinrichtung - bei einem frontalen Aufprall eines Fahrzeuginsassen auf die Lenkbetätigung nach unten verkippt, so dass der der Lenkbetätigung zugewandte Endabschnitt der Halterung sich im Wesentlichen parallel zur Fahrzeuglängsrichtung erstreckt bzw. ein an dieser Halterung gelagertes Lenkrad mit seinem Lenkradkranz in einer Ebene sich im Wesentlichen senkrecht zur Fahrzeuglängsrichtung erstreckt. Hierdurch liegt die durch den Lenkradkranz definierte Ebene im Wesentlichen parallel zu der Ebene des Oberkörpers eines aufprallenden Insassen.

Das Verkippen der Halterung kann zum Einen dadurch erreicht werden, dass zumindest ein Abschnitt der Halterung um eine Achse verschwenkbar ist; andererseits kann die Halterung zur Ausführung der Kippbewegung deformierbar, insbesondere biegbar sein. Um eine hierfür hinreichende Deformierbarkeit der Halterung sicher zu stellen, kann diese Schwächungsbereiche, insbesondere in Form Kerben aufweisen, die derart angeordnet und ausgebildet sind, dass eine Vorzugsrichtung der Kippbewegung definiert wird.

Zur Verkürzung der Halterung kann diese stauchbar ausgebildet sein, wobei insbesondere Schwächungsbereiche vorgesehen sein können, die ein definiertes Stauchen der Halterung durch einen aufprallenden Insassen ermöglichen.

Nach einer anderen Ausführungsform ist die Halterung teleskopierbar ausgebildet, wobei insbesondere eine hydraulische oder pneumatische Teleskopiereinrichtung vorgesehen sein kann, so dass die Halterung entgegen der Wirkung eines Fluids teleskopierbar ist.

Die Halterung wird vorzugsweise durch eine Säule gebildet, die einen (zur Anpassung an die räumlichen Gegebenheiten im Bereich des Lenkrades ggf. abgewinkelten) Endabschnitt aufweist, welcher die Drehachse der Lenkbetätigung bildet.

Die Halterung weist an ihrem der Lenkbetätigung zugewandten Endabschnitt vorzugsweise mindestens eine stationäre Baugruppe auf, der eine nicht der Lenkung dienende Funktion zukommt, z. B. als Sicherheitseinrichtung (in Form eines Airbagmoduls) und/oder als elektrisches Gerät oder elektrische Betätigungseinrichtung für weitere Funktionsgruppen (Audiosystem, Hupe, etc.) eines Kraftfahrzeugs.

Durch die ortsfeste Anordnung einer Sicherheitseinrichtung in Form eines Airbagmodules im Bereich der Lenkbetätigung, wobei die Positionierung des Airbagmodules bei einer Bedienung der Lenkbetätigung nicht beeinflusst wird, kann das Airbagmodul mittels einer asymmetrischen Ausbildung bezüglich der Achse der Lenkbetätigung gezielt im Hinblick auf einen optimalen Schutz eines Fahrzeuginsassen, auch in einem sogenannten oop-Fall (bei dem sich der entsprechende Fahrzeuginsasse außerhalb seiner normalen Sitzposition zu dicht bei der Lenkbetätigung befindet) optimiert werden.

Hierbei kann insbesondere auch eine asymmetrische Faltung des in dem Airbagmodul enthaltenen, aufblasbaren Gassackes vorgesehen sein. Da die Lage des Airbagmodules bei einer Bedienung der Lenkbetätigung nicht beeinflusst wird, verbleibt das Airbagmodul und somit auch der in dem Airbagmodul angeordnete Gassack stets in der gewünschten Lage bezüglich des entsprechenden Fahrzeuginsassen.

Zur ortsfesten Fixierung der Halterung kann diese beispielsweise an einer das Lenkelement umschließenden Lenksäulenverkleidung oder an einem im Bereich des Armaturenbrettes verlaufenden Querträger festgelegt sein.

Die Getriebeanordnung, die zu einer Umsetzung einer Drehbewegung der Lenkbetätigung in eine Bewegung des zugehörigen Lenkelementes dient, kann beispielsweise als Zahnradgetriebe ausgebildet sein. Sie kann aber auch ein Endlosglied, insbesondere in Form einer Kette oder eines Zahnriemens umfassen, das antriebsseitig mit der Lenkbetätigung und abtriebsseitig mit dem längserstreckten Lenkelement gekoppelt ist. In jedem Fall muß die Kopplung zwischen der Lenkbetätigung und dem längserstreckten Lenkelement derart ausgebildet sein, dass sie einem Verkippen bzw. Verkürzen der Halterung und einer damit verbundenen Bewegung der Lenkbetätigung relativ zu dem längserstreckten Lenkelement nicht entgegen steht. Im Fall eines Zahnradgetriebes kann dies z.B. dadurch erreicht werden, daß die entsprechenden Verzahnungselemente durch die im Crash-Fall auftretenden Kräfte derart verformbar sind, daß die lenkbetätigungsseitigen und die lenkelementseitigen Zahnräder außer Eingriff geraten. Ein Riemen- bzw. Kettengetriebe kann demgegenüber derart eingerichtet sein, daß der Riemen bzw. die Kette unter der Wirkung der Crash-Kräfte von den zugeordneten An- und/oder Abtriebselementen abrutscht.

Vorzugsweise ist die Haltesäule derart bezüglich des längserstreckten Lenkelementes angeordnet ist, daß beim Aufprall eines Fahrzeuginsassen die Lenkbetätigung um ein auf der Längsachse des längserstreckten Lenkelementes angeordnetes Getriebeelement der Getriebeanordnung verkippt, wobei die Getriebeanordnung als Hebel wirkt, der sich von der Längsachse des längserstreckten Lenkelementes zur Drehachse der Lenkbetätigung erstreckt.

Ferner ist die Getriebeanordnung derart ausgebildet, daß durch die beim Aufprallen eines Fahrzeuginsassen auf die Lenkeinrichtung wirkenden Kräfte lenkbetätigungsseitige und lenkelementseitige Getriebeelemente der Getriebeanordnung (z.B. durch Abrutschen eines Riemens oder Deformation von Verzahnungselementen) schließlich außer Eingriff bringbar sind, um das gewünschte Verformen bzw. Bewegen der Halterung nicht zu behindern.

Sofern die Getriebeanordnung zumindest teilweise in einem Gehäuse angeordnet ist, läßt sich dieses vorzugsweise beim Verkippen bzw. Verkürzen der Halterung zerstören. Hierdurch soll sichergestellt werden, dass das Gehäuse einer Bewegung der Halterung relativ zu dem Lenkelement nicht entgegenwirkt. Das Gehäuse kann hierzu mit Schwächungsbereichen, bei denen es sich beispielsweise um Sollbruchstellen handeln kann, versehen sein.

Die Halterung, die Lenkbetätigung sowie die Getriebeanordnung können unter Verwendung einer geeigneten Aufnahme für die Getriebeanordnung zu einem vormontierbaren Modul zusammengefasst werden, das sich als Ganzes auf ein übliches Lenkelement in Form einer Lenkspindel bzw. Lenkwelle aufsetzen lässt. Dieses Modul kann außerdem auch eine an der Halterung befestigte zusätzliche Baugruppe, wie z. B. ein Airbagmodul und/oder Betätigungseinrichtungen für elektrische Geräte in einem Kraftfahrzeug integriert sein.

Weitere Merkmale und Vorteile der Erfindung werden bei der nachfolgende Beschreibung eines Ausführungsbeispiels anhand der Figuren deutlich werden.

Es zeigen:
- Figur 1 -: eine Seitenansicht einer ersten Ausführungsform einer Lenkeinrichtung mit einer außerhalb der Drehachse des Lenkrades angeordneten Lenkspindel und mit einer separaten Haltesäule zur drehbaren Aufnahme des Lenkrades;
- Figur 2 -: eine Abwandlung des Ausführungsbeispiels aus Figur 1.

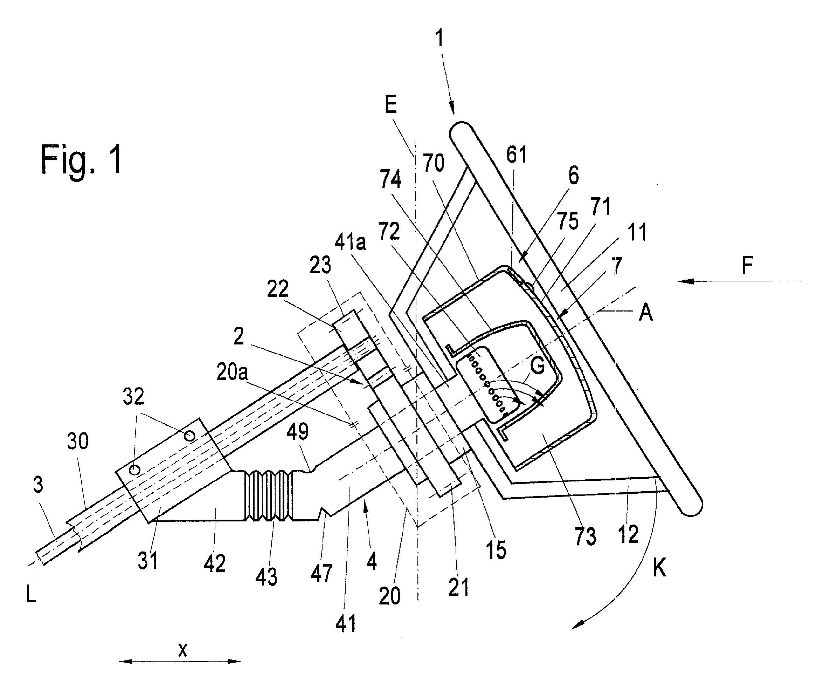

In Figur 1 ist eine Lenkeinrichtung für ein Kraftfahrzeug mit einer Lenkbetätigung in Form eines Lenkrades 1 dargestellt. Das Lenkrad 1 weist einen Lenkradkranz 11 sowie Speichen 12 auf, die sich von dem Lenkradkranz 11 zu einer Lenkradnabe 15 erstrecken. Die Nabe 15 ist drehbar auf einem Endabschnitt 41a einer Haltesäule 4 gelagert, die dadurch eine Drehachse A des Lenkrades 1 definiert.

Außerhalb dieser Drehachse A ist ein längserstrecktes Lenkelement in Form einer Lenkwelle bzw. Lenkspindel 3 drehbar gelagert, mit der eine Drehbewegung des Lenkrades 1 und damit der Lenkradnabe 15 auf ein Lenkgetriebe und schließlich auf die Spurstange eines Kraftfahrzeugs übertragbar ist.

Zur Koppelung der Lenkradnabe 15 mit der Lenkwelle bzw. Lenkspindel 3 ist eine Getriebeanordnung 2 vorgesehen. Diese umfasst eine am Umfang der Lenkradnabe 15 angeordnete Außenverzahnung 21 sowie ein konzentrisch und drehfest mit der Lenkspindel 3 verbundenes Zahnrad 22, dessen Außenverzahnung 23 mit der Außenverzahnung 21 der Lenkradnabe 15 kämmt. Hierdurch wird eine Drehbewegung der Lenkradnabe 15 um die Drehachse A des Lenkrades 1 unmittelbar in eine Drehbewegung der Lenkspindel um ihre Längsachse L umgesetzt.

Zum Schutz der Getriebeanordnung 2 kann ein Gehäuse 20 vorgesehen sein. Die Wand des Gehäuses 2 ist mit Schwächungsbereichen in Form von Sollbruchstellen 20a versehen, die eine Zerstörung des Gehäuses beim Wirken einer definierten äußeren Kraft zulassen. Weiterhin ist die Lenkspindel 3 durch ein Mantelrohr 30 umgeben, das ortsfest (also nicht mit der Lenkspindel 3 mitdrehend) in dem entsprechenden Kraftfahrzeug angeordnet ist und auf dem mittels geeigneter Befestigungselemente 32 eine Hülse 31 befestigt ist. Diese Hülse 31 bildet zugleich das dem Lenkrad 1 und der Lenkradnabe 15 abgewandte Ende der Haltesäule 4. Somit ist letztere durch die Hülse 31 an einem fahrzeugfesten Bauteil (Mantelrohr 30) festgelegt.

Die Haltesäule 4 erstreckt sich von der genannten Hülse 31 bis zu einem Endabschnitt 41a, der einerseits eine Drehachse der Lenkradnabe 15 und damit des Lenkrades 1 definiert und der andererseits zur ortsfesten (nicht drehbaren) Aufnahme einer zusätzlichen Baugruppe 6 dient.

Der Endabschnitt 41a bildet dabei das lenkradseitige Ende eines ersten Abschnittes 41 der Haltesäule 4, der parallel zur Drehachse A des Lenkrades 1 ausgerichtet ist. Dieser erster Abschnitt 41 der Haltesäule 4 steht winkelig von einem zweiten Abschnitt 42 ab, der sich von dem genannten ersten Abschnitt der Haltesäule 4 bis zu der Hülse 31 am Mantelrohr 30 erstreckt. Die an dem lenkradseitigen Endabschnitt 41a der Haltesäule 4 ortsfest angeordnete zusätzliche Baugruppe 6 umfasst insbesondere ein Airbagmodul 7 mit einem Gehäuse 70, einer Kappe 71, einem Gasgenerator 72 und einem durch den Gasgenerator 72 aufblasbaren Gassack 73. Dieser Gassack 73 wird bei einer crash-bedingten starken Fahrzeugverzögerung, die durch einen geeigneten Sensor detektierbar ist, automatisch mittels des Gasgenerators 72 aufgeblasen und öffnet hierbei die Kappe 71 des Airbagmodules 7, so dass er sich aus dessen Gehäuse 70 heraus entfalten kann, um ein Schutzkissen für einen hinter dem Lenkrad sitzenden Fahrzeuginsassen zu bilden.

Da das Airbagmodul 7 feststehend in dem von dem Lenkradkranz 11 umschlossenen Bereich angeordnet ist, kann dieses gezielt im Hinblick auf ein optimales Crash-Verhalten, insbesondere auch unter Berücksichtigung sogenannter oop-Fälle, bei denen sich der Fahrer im Zeitpunkt der Fahrzeugverzögerung außerhalb seiner normalen Sitzposition sehr dicht beim Lenkrad befindet, optimiert werden. Eine derartige Optimierung des Airbagmodules 7 erfordert regelmäßig eine asymmetrische Ausbildung wesentlicher Teile des Modules, wie z. B. des Gehäuses 70, der Kappe 71, des Gasgenerators 72 sowie der Faltung des Gassackes 73, vergl. DE 199 27 024 A1. Durch die räumlich fixierte Lage des (sich nicht mit dem Lenkrad 1 mitdrehenden) Airbagmodules 7, ist sichergestellt, dass die Vorteile einer asymmetrischen, unter Berücksichtigung der Körperform eines Fahrzeuginsassen crashoptimierten Auslegung der genannten Bestandteile des Airbagmodules 7 unabhängig von der aktuellen Winkellage des Lenkrades 1 stets erhalten bleibt. Denn das Airbagmodul 7 ist feststehend zwischen dem Lenkradkranz 11 angeordnet und bleibt daher unabhängig von dem aktuellen Lenkwinkel stets in seiner ursprünglichen, durch die Befestigung an der Haltesäule 4 fixierten Position.

Durch eine geeignete Ausbildung von Gehäuse 70, Kappe 71, Gasgenerator 72 und Gassack 73 kann insbesondere sichergestellt werden, dass in einem oop-Fall, der mittels eines geeigneten Sensors 75 detektierbar ist, der Gassack sich bevorzugt zunächst im unteren, den Oberschenkeln eines Fahrzeuginsassen zugewandten Bereich des Airbagmodules 7 entfaltet. Hierzu kann auch vorgesehen sein, dass der Gasstrom G mittels eines Diffusors 74 zunächst in den unteren Bereich des Airbagmodules 7 geleitet wird, vergleiche die in Figur 1 dargestellten Pfeile G, die im unteren Bereich des Airbagmodules 7 verlaufen. Hierdurch wird in einem oop-Fall verhindert, dass der sich beim Aufblasen entfaltende Gassack schon frühzeitig einen zu starken Druck auf den Oberkörper oder Kopf eines Insassen ausübt, vergl. DE 199 27 024 A1. Vielmehr erfolgt dann die Entfaltung zunächst im Bereich des Unterkörpers bzw. der Oberschenkel eines Fahrzeuginsassen und erst anschließend kommt es verzögert zum Befüllen und Entfalten derjenigen Abschnitte des Gassackes 73, die dem Brust- und Kopfbereich des Insassen (Fahrers) zugeordnet sind.

Die zusätzliche Baugruppe 6 kann neben dem Airbagmodul 7 z.B. noch elektrische Betätigungeinrichtungen 61 (Schalter) für elektrische Geräte des Kraftfahrzeugs, wie z. B. eines Audiosystems oder einer Hupe, aufweisen, sowie elektrische Instrumente, z. B. in Form von Anzeigeeinrichtungen.

Eine Besonderheit der in Figur 1 dargestellten Lenkeinrichtung besteht darin, dass sich die Haltesäule 4 bei einer Crash-bedingten Interaktion mit einem Insassen, der frontal auf das Lenkrad 1 bzw. auf den sich entfaltenden Gassack 73 aufprallt, in einer definierten Weise verkürzt und außerdem verkippt. Dieses Verkürzen bzw. Verkippen kann dabei ggf. schon durch die Rückstoßwirkung des sich entfaltenden Gassackes 73 eingeleitet werden.

Das Verkürzen der Haltesäule 4 wird in dem Ausführungsbeispiel gemäß Figur 1 dadurch erreicht, dass die Haltesäule 4 in ihrem zweiten, hülsenseitigen Abschnitt 42, der im Wesentlichen in Fahrzeuglängsrichtung x verläuft, einen Schwächungsbereich 43 aufweist, der ein Stauchen der Haltesäule 4 aufgrund der bei der Interaktion mit einem Insassen auftretenden Kraft F bewirkt. Dieser Schwächungsbereich 43 ist somit als ein Deformationsbereich ausgebildet, der ein Stauchen und damit eine Verkürzung der Haltesäule 4 ermöglicht.

Um ein definiertes Verkippen des lenkradseitigen, ersten Abschnittes 41 der Haltesäule 4 und damit auch des Lenkrades 1 und der zusätzlichen Baugruppe 6 mit dem Airbagmodul 7 entlang einer vorgebbaren Richtung K zu ermöglichen, weist die Haltesäule 4 im Bereich des Überganges von dem ersten Abschnitt 41 zu dem zweiten Abschnitt 42 eine Kerbe 47 sowie einen der Kerbe 47 gegenüberliegend angeordneten Dehnungs-/Stauchungsbereich 49 auf, der durch einen besonders dehn- bzw. stauchbaren Materialabschnitt gebildet wird. Diese Kombination einer Kerbe 47 mit einem Dehnungs-/ Stauchungsbereich bewirkt, dass bei einem frontalen Aufprall eines Insassen auf das Lenkrad 1 bzw. den sich aus dem Modul 7 entfaltenden Gassack 73 der erste Abschnitt 41 der Haltesäule 4 derart verkippt, dass sich der Lenkradkranz 11 in einer im Wesentlichen senkrecht zur Fahrzeuglängsrichtung x liegenden Ebene erstreckt. Mit anderen Worten ausgedrückt. wird der Lenkradkranz 11, der sich zunächst in einer schräg bezüglich der Fahrzeuglängsrichtung x verlaufenden Ebene befindet, in eine Ebene verkippt, die im Wesentlichen senkrecht zur Fahrzeuglängsrichtung x liegt.

Das Verkippen der Haltesäule 4 und damit des Lenkrades 1 unter der Kraft F eines aufprallenden Insassen erfolgt dabei (wegen der Anordnung der Drehachse A des Lenkrades 1 außerhalb der Längsachse L der Lenkspindel 3) zunächst um einen auf der Längsachse L der Lenkspindel 3 liegenden und durch das auf dieser Längsachse L liegende Zahnrad 22 definierten Schwenkpunkt, der durch eine hinreichend feste, starre Anordnung und Ausbildung von Lenkspindel 3 und Mantelrohr 30 fixiert ist. Hierdurch wirkt die Getriebeanordnung 2 als Hebel, der die Schwenkbewegung von Haltesäule 4 und Lenkrad 1 einleitet, bei der sich das Lenkrad 1 in Richtung auf die Hülse 32 bewegt (Nabe 15, Zahnrad 22 und Hülse 31 bilden hierbei eine Art "Dreigelenk"). Im weiteren Verlauf geraten dann die Nabe 15 und das Zahnrad 22 außer Eingriff, z.B. durch eine Verformung der Verzahnungsbereiche 21, 23 aufgrund der crash-bedingten Kräfte F bzw. der entsprechenden Momente, um die gewünschte Bewegung und Verformung der Halterung 4 zu ermöglichen. Gleichzeitig wird das Gehäuse 20 der Getriebeanordnung 2 zerstört.

In Figur 1 ist die senkrecht zur Fahrzeuglängsrichtung x liegende Ebene E gestrichelt angedeutet, in die der Lenkradkranz 11 durch ein kombiniertes Verkippen und Verkürzen der Haltesäule 4 überführt wird. Es ist erkennbar, dass sich der Lenkradkranz 4 und damit auch das Airbagmodul 7 aufgrund des kombinierten Verkürzens und Verkippens der Haltesäule 4 einerseits von dem Körper eines hinter dem Lenkrad 1 befindlichen Insassen (Fahrers) entfernt haben und dass der Lenkradkranz 11 sowie die Kappe 71 des Airbagmoduls 7 nunmehr in einer Ebene E liegen, die im Wesentlichen senkrecht zur Fahrzeuglängsrichtung x und damit im Wesentlichen parallel zum Oberkörper eines aufrecht sitzenden Insassen liegt.

Durch das Stauchen bzw. Verkürzen der Haltesäule 4 wird der Aufprall eines Insassen auf den sich entfaltenden Gassack 73 abgemildert. Durch das gleichzeitige Verkippen des Lenkrades 1 und damit auch des Airbagmodules 7 in eine senkrechte Lage entfaltet sich der Gassack 73 im Wesentlichen in Fahrzeuglängsrichtung x aus dem Modulgehäuse 70 heraus. Hierdurch ist die Hauptentfaltungsrichtung des Gassackes 73 (in Fahrzeuglängsrichtung x) an die Bewegungsrichtung des aufprallenden Insassen angepasst, der sich bei einem Front-Crash im Wesentlichen genau entgegengesetzt zu der Hauptentfaltungsrichtung des Gassackes 73 bewegt. Hierdurch wird das Zusammenwirkens des Insassen mit dem Gassack biomechanisch optimiert.

Von Bedeutung für die vorliegende Erfindung ist ferner, dass durch die Anordnung der Lenkwelle bzw. Lenkspindel 3 außerhalb der Drehachse A (die durch die Haltesäule 4 definiert wird) das Verkippen und Verkürzen der Haltesäule 4 durch die Lenkspindel 3 nicht beeinträchtigt wird. Daher können das Lenkrad 1 und das Airbagmodul 7 durch ein geeignetes, definiertes Verkippen und Verkürzen der Haltesäule 4 ohne Behinderung durch die Lenkspindel 3 in ihre gewünschte Endlage gebracht werden.

Alternativ zu dem in Figur 1 vorgesehenen Schwächungsbereich 43 im zweiten Abschnitt 42 der Haltesäule 4 könnte ein Verkürzen der Haltesäule 4 z. B. auch dadurch erfolgen, dass die Haltesäule 4 auf dem Mantelrohr 30 in einer Richtung weg vom Insassen verschoben wird. Hierzu müsste die Verbindung zwischen der auf dem Mantelrohr 30 gelagerten Hülse 31 und dem Mantelrohr 30 derart gestaltet werden, dass sie sich beim Aufprall eines Fahrzeuginsassen auf das Lenkrad 1 bzw. den sich entfaltenden Gassack 73 löst und ein Verschieben der Hülse 31 und damit der Haltesäule 4 entlang des Mantelrohres 30 ermöglicht. Auch hierdurch wird die effektive Länge der Haltesäule 4 verkürzt, da die Haltesäule 4 teleskopartig auf dem Mantelrohr 30 verschiebbar ist.

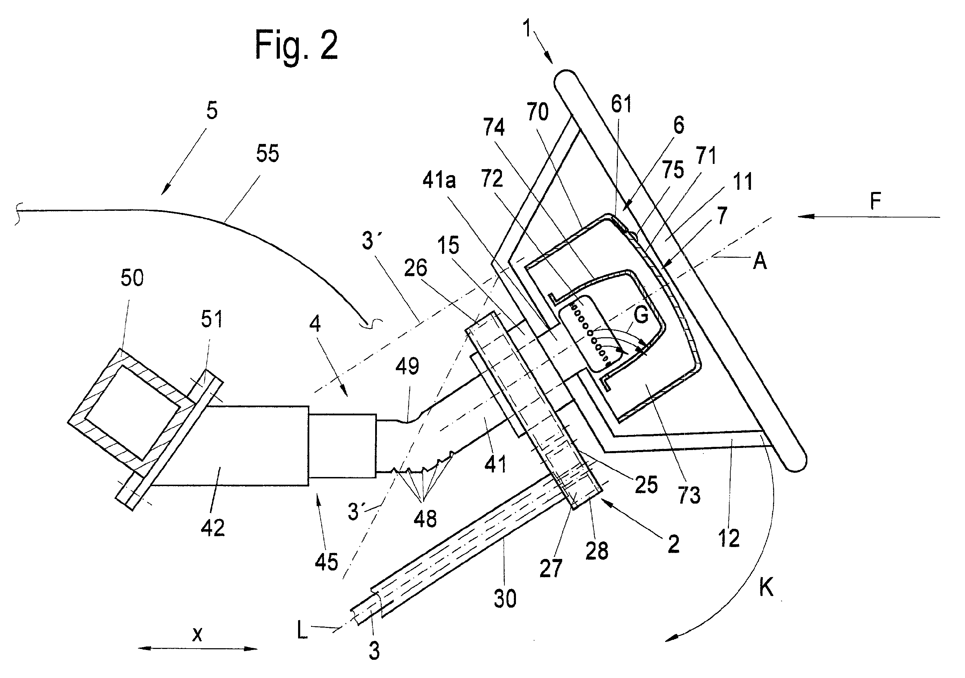

Bei einem anderen, in Figur 2 dargestellten Ausführungsbeispiel der Erfindung ist die Haltesäule 4 selbst unmittelbar teleskopierbar ausgebildet, indem der zweite Abschnitt 42 der Haltesäule 4 teleskopierbar ist, also eine Teleskopiereinrichtung 45 bildet. Das Verkippen der Haltesäule 4 wird auch dort durch mehrere Kerben 48 ermöglicht.

Damit die Teleskopiereinrichtung 45 erst ab einer definierten auf das Lenkrad 1 bzw. das Airbagmodul 7 ausgeübten Kraft (Aufprall eines Fahrzeuginsassen) wirksam wird, können in der Teleskopiereinrichtung 45 ein Fluid oder ein sonstiges Mittel (z. B. elastische Elemente) vorgesehen sein, die einer Verkürzung der Haltesäule 4 entgegenwirken und die nur durch eine vorgebbare Mindestkraft überwindbar sind.

Ein weiterer Unterschied zwischen dem Ausführungsbeispiel gemäß Figur 2 und der in Figur 1 dargestellten Lenkeinrichtung besteht darin, dass die Haltesäule 4 gemäß Figur 2 an einem im Bereich der Armaturentafel 55 verlaufenden Querträger 50 der Fahrzeugstruktur 5 über einen Flansch 51 befestigt ist.

Ferner dient gemäß Figur 2 ein Endlosglied in Form eines aus Kunststoff bestehenden Zahnriemens 25, der durch eine Außenverzahnung 26 der Lenkradnabe 15 angetrieben wird, zur Übertragung der Drehbewegung des Lenkrades 1 auf die Lenkwelle bzw. Lenkspindel 3. Hierzu steht der Zahnriemen 25 in Eingriff mit der Außenverzahnung 28 eines konzentrisch und drehfest auf der Lenkspindel 3 angeordneten Zahnrades 27.

Die Kopplung des Lenkrades 1 mit der Lenkspindel 3 über einen Zahnriemen 25 hat den Vorteil, dass hierdurch in einfacher Weise eine crash-bedingte Bewegung der Haltesäule 4 bezüglich der Lenkspindel 3 ausgeglichen werden kann, wenn der Zahnriemen 25 aufgrund der im Crash-Fall wirkenden Kräfte F von den zugeordneten Getriebeelementen 15, 27 abrutscht. Ferner ermöglicht die Verwendung eines solchen Zahnriemens 25 eine große Flexibilität hinsichtlich der räumlichen Anordnung der Lenkspindel 3 einerseits und der Haltesäule 4 andererseits. Eine Mehrzahl unterschiedlicher Anordnungen der Lenkspindel 3 bezüglich der Haltesäule 4 ist in Figur 1 gestrichelt dargestellt, wobei die gestrichelten Linien mit der Bezeichnung 3' jeweils mögliche alternative Anordnungen der Lenkspindel 3 bzw. von deren Längsachse L bezeichnen.

Vorliegend ist die Haltesäule 4 derart bezüglich der Lenkspindel 3 angeordnet, daß die gewünschte Kippbewegung K des Lenkrades 1 nicht um das auf der Lenkspindel 3 gelagerte Zahnrad 27 als Schwenkpunkt erfolgen kann. Vielmehr würde die hier gewählte Anordnung von Lenkspindel 3 und Haltesäule 4 der gewünschten Kippbewegung entgegenstehen. Daher müssen Mittel vorgesehen sein, die in einem Crash-Fall ein Ausweichen der Lenkspindel 3 (z.B. durch Verkippen nach unten) ermöglichen, um die gewünschte Bewegung der Haltesäule 4 zuzulassen.

Das vorbeschriebene Problem ließe sich ferner dadurch beheben, daß die Lenkspindel entlang einer der in Fig. 2 gestrichelt angedeuteten Linien 3' angeordnet wird, sofern das aufgrund der Platzverhältnisse im entsprechenden Fahrzeug möglich ist. Die Anordnung von Lenkspindel 3 und Haltesäule 4 entspräche dann im wesentlichen der in Fig. 1 gezeigten.

Im Übrigen stimmt das Ausführungsbeispiel gemäß Figur 2 mit dem Ausführungsbeispiel gemäß Figur 1 überein, so dass hinsichtlich der weiteren Einzelheiten auf die obigen Ausführungen verwiesen wird.

## Patentansprüche

1. Lenkeinrichtung für ein Kraftfahrzeug mit
- einer Lenkbetätigung, die drehbar auf einer Achse gelagert und zur Bedienung durch einen Fahrzeuginsassen ausgebildet ist, insbesondere in Form eines Lenkrades,
- einer Getriebeanordnung, mittels der eine Drehbewegung der Lenkbetätigung in eine Bewegung eines außerhalb der Drehachse angeordneten längserstreckten Lenkelementes, umsetzbar ist, und
- einer längserstreckten Halterung, die die Drehachse der Lenkbetätigung definiert und die an einer ortsfesten Struktur des Kraftfahrzeugs festgelegt ist,
**dadurch gekennzeichnet,**
**daß** die Halterung (4) mindestens ein Element (43, 45; 47, 48, 49) aufweist, das bei einem Aufprall eines Fahrzeuginsassen auf die Lenkbetätigung (1) eine Verkürzung und/oder ein Verkippen der Halterung (4) bewirkt.

2. Lenkeinrichtung nach Anspruch 1, **dadurch gekennzeichnet, daß** die Halterung (4), bezogen auf den in einem Kraftfahrzeug eingebauten Zustand der Lenkeinrichtung, bei einem frontalen Aufprall eines Fahrzeuginsassen nach unten verkippt.

3. Lenkeinrichtung nach Anspruch 1 oder 2, **dadurch gekennzeichnet, daß** die Halterung (4) derart verkippt, daß der der Lenkbetätigung (1) zugewandte Endabschnitt (41a) der Halterung (4), bezogen auf den in einem Kraftfahrzeug eingebauten Zustand der Lenkeinrichtung, sich im wesentlichen parallel zur Fahrzeuglängsrichtung (x) erstreckt.

4. Lenkeinrichtung nach einem der vorhergehenden Ansprüche, **dadurch gekennzeichnet, daß** die Halterung (4) zur Ausführung der Kippbewegung zumindest abschnittsweise um eine Achse verschwenkbar ist.

5. Lenkeinrichtung nach einem der vorhergehenden Ansprüche, **dadurch gekennzeichnet, daß** die Halterung (4) zur Ausführung der Kippbewegung deformierbar, insbesondere biegbar, ist.

6. Lenkeinrichtung nach Anspruch 5, **dadurch gekennzeichnet, daß** die Halterung (4) zumindest abschnittsweise aus einem hinreichend deformierbaren Material besteht.

7. Lenkeinrichtung nach Anspruch 5 oder 6, **dadurch gekennzeichnet, daß** die Halterung (4) mindestens einen Schwächungsbereich (47, 48, 49) aufweist, der derart angeordnet und ausgebildet ist, daß eine Vorzugsrichtung (K) der Kippbewegung definiert wird.

8. Lenkeinrichtung nach Anspruch 7, **dadurch gekennzeichnet, daß** die Schwächungsbereiche (47, 48) zumindest teilweise durch Einkerbungen in der Halterung (4) gebildet werden.

9. Lenkeinrichtung nach einem der vorhergehenden Ansprüche, **dadurch gekennzeichnet, daß** die Halterung (4) stauchbar ausgebildet ist.

10. Lenkeinrichtung nach Anspruch 9, **dadurch gekennzeichnet, daß** die Halterung (4) mindestens einen Schwächungsbereich (43) aufweist, um das Stauchen zu erleichtern.

11. Lenkeinrichtung nach einem der vorhergehenden Ansprüche, **dadurch gekennzeichnet, daß** die Halterung (4) teleskopierbar ist.

12. Lenkeinrichtung nach Anspruch 11, **dadurch gekennzeichnet, daß** die Halterung (4) entgegen der Wirkung eines Fluids oder elastischer Mittel teleskopierbar ist.

13. Lenkeinrichtung nach einem der vorhergehenden Ansprüche, **dadurch gekennzeichnet, daß** die Halterung (4) durch eine Haltesäule gebildet wird.

14. Lenkeinrichtung nach Anspruch 13, **dadurch gekennzeichnet, daß** die Drehachse (A) durch einen abgewinkelten Endabschnitt (41a) der Haltesäule (4) definiert wird.

15. Lenkeinrichtung nach einem der vorhergehenden Ansprüche, **dadurch gekennzeichnet, daß** die Halterung (4) an ihrem der Lenkbetätigung zugewandten Endabschnitt (41a) mindestens eine stationäre Baugruppe (6) aufweist, die eine nicht der Lenkung dienende Funktion aufweist.

16. Lenkeinrichtung nach Anspruch 15, **dadurch gekennzeichnet, daß** die stationäre Baugruppe (6) eine Sicherheitseinrichtung (7) zum Schutz eines Insassen bei einem Aufprall umfaßt und/oder elektrische Funktionsgruppen (61) eines Kraftfahrzeugs umfaßt.

17. Lenkeinrichtung nach Anspruch 16, **dadurch gekennzeichnet, daß** die Sicherheitseinrichtung (7) durch ein Airbagmodul gebildet wird.

18. Lenkeinrichtung nach Anspruch 17, **dadurch gekennzeichnet, daß** das Airbagmodul (7) asymmetrisch bezüglich der Drehachse (A) ausgebildet ist.

19. Lenkeinrichtung nach Anspruch 17 oder 18, **dadurch gekennzeichnet, daß** das Airbagmodul (7) einen aufblasbaren Gassack (73) aufweist, der asymmetrisch bezüglich der Drehachse (A) gefaltet ist.

20. Lenkeinrichtung nach einem der vorhergehenden Ansprüche, **gekennzeichnet durch** eine das Lenkelement (3) umschließenden stationären Verkleidung (30), an der die Halterung (4) festgelegt ist.

21. Lenkeinrichtung nach einem der vorhergehenden Ansprüche, **dadurch gekennzeichnet, daß** die Halterung (4) zur Festlegung an einem Querträger (50) im Bereich der Armaturentafel (55) vorgesehen ist.

22. Lenkeinrichtung nach einem der vorhergehenden Ansprüche, **dadurch gekennzeichnet, daß** das Lenkelement (3) als Lenkwelle ausgebildet ist.

23. Lenkeinrichtung nach einem der vorhergehenden Ansprüche, **dadurch gekennzeichnet, daß** die Getriebanordnung (2) durch ein Zahnradgetriebe (21 - 23) gebildet wird.

24. Lenkeinrichtung nach einem der vorhergehenden Ansprüche, **dadurch gekennzeichnet, daß** zur Übertragung einer Drehbewegung der Lenkbetätigung (1) auf das Lenkelement (3) ein Endlosglied (25), insbesondere in Form einer Kette oder eines Zahnriemens vorgesehen ist.

25. Lenkeinrichtung nach einem der vorhergehenden Ansprüche, **dadurch gekennzeichnet, daß** die Haltesäule (4) derart bezüglich des längserstreckten Lenkelementes (3) angeordnet ist, daß beim Aufprall eines Fahrzeuginsassen die Lenkbetätigung (1) um ein auf der Längsachse (L) des längserstreckten Lenkelementes (3) angeordnetes Getriebeelement (22) der Getriebeanordnung (2) verkippt.

26. Lenkeinrichtung nach Anspruch 25, **dadurch gekennzeichnet, daß** die Getriebeanordnung (2) als Hebel wirkt, der sich von der Längsachse (L) des längserstreckten Lenkelementes (3) zur Drehachse (A) der Lenkbetätigung (1) erstreckt.

27. Lenkeinrichtung nach einem der vorhergehenden Ansprüche, **dadurch gekennzeichnet, daß** durch die beim Aufprall eines Fahrzeuginsassen auf die Lenkeinrichtung (1) wirkenden Kräfte (F) lenkbetätigungsseitige und lenkelementseitige Getriebeelemente (15, 22) der Getriebeanordnung (2) außer Eingriff bringbar sind.

28. Lenkeinrichtung nach einem der vorhergehenden Ansprüche, **dadurch gekennzeichnet, daß** die Getriebeanordnung (2) zumindest teilweise in einem Gehäuse (20) angeordnet ist, welches beim Verkippen und/oder Verkürzen der Halterung (4) zerstörbar ist.

29. Lenkeinrichtung nach Anspruch 28, **dadurch gekennzeichnet, daß** das Gehäuse (20) mindestens einen Schwächungsbereich (20a), insbesondere in Form einer Sollbruchstelle, aufweist.

30. Lenkeinrichtung nach einem der vorhergehenden Ansprüche, **dadurch gekennzeichnet, daß** die Lenkbetätigung (1) und die Getriebeanordnung (2) als ein vormontierbares Modul (1, 2, 6) ausgebildet sind, das mit dem Lenkelement (3) in Verbindung bringbar ist.

31. Lenkeinrichtung nach Anspruch 15 und 30, **dadurch gekennzeichnet, daß** die stationäre Baugruppe (6) einen Bestandteil des Modules (1, 2, 6) bildet.

32. Lenkeinrichtung nach einem der vorhergehenden Ansprüche, **dadurch gekennzeichnet, daß** die Lenkbetätigung (1) durch einen Lenkrad gebildet wird.
